# EUROPEAN PATENT APPLICATION

(11) **EP 2 698 409 A1**
(43) Date of publication of application: **19.02.2014**
(21) Application number: 12184064.9
(22) Date of filing: 12.09.2012
(51) Int. Cl.: C09K 8/80, C04B 33/04, C04B 33/135

(54) **Light ceramic proppants and a method of manufacturing of light ceramic proppants**

(30) Priority: 17.08.2012 PL 40042012
(71) Applicant: Baltic Ceramics S.A., 68-300 Lubsko (PL)
(72) Inventor: Marchwicki, Maciej, 68-300 Lubsko (PL)
(74) Representative: Pawlowski, Adam

(57) **Abstract**

Light ceramic proppants made from a mixture of clays, characterised in that they are manufactured from a mixture consisting of illite-beidellite-kaolinite high-plastic clays of the Poznan series, containing from 10% to 27% by weight of Al₂O₃ in the amount of 10% to 40% by weight; kaolinitic clays, containing from 18% to 32% by weight of Al₂O₃, in the amount of 30% to 45% by weight; kaolin, containing from 28% to 40% by weight of Al₂O₃, in the amount of 30% to 40% by weight; fly ash from brown coal combusted in a power plant, containing from 28% to 33% by weight of Al₂O₃, in the amount of 10% to 35% by weight; and treatment agents in the amount of up to 10%; wherein the proppants contain from 18% to 32% by weight of Al₂O₃, from 40% to 76% by weight of SiO₂, and have a specific gravity from 2.15 Mg/m3 to 2.90 Mg/m3 and a bulk density from 1.35 Mg/m3 to 1.70 Mg/m3.

## Description

This present invention relates to light ceramic proppants and a method for manufacturing thereof. Ceramic proppants are used in mining hydrocarbons: shale gas and crude oil, located in shale rocks.

When extracting oil and shale gas, a method of hydraulic fracture or of dry fracture is used. In each of these methods, shale rock around a horizontally-drilled hole are crushed, and then into the borehole there is entered LPG or a liquid with addition of sand or ceramic proppants (a granulated ceramic material), wherein the liquid preferably contains pentane in a form of gel suspension containing ceramic proppants. The ceramic proppants are added in each method to prevent closing the gaps in crushed shale rocks after reducing the pressure at the end of the fracturing process. The use of ceramic proppants results in better flows of hydrocarbons through the crushed rock and in effect significantly improves the productivity of well bore.

The essential technical parameters for proppants are: compression strength, atmospheric, bulk density, specific gravity. The prerequisite for the application of proppants is their chemical inertness.

A high viscosity of liquid and gel is necessary to produce suspension and to transport proppants, however it is limited by the need to achieve an adequate flow of crushing substance into drilled rock fractures. In this situation the specific gravity of proppants is of great importance.

Higher compression strength offers the possibility to use proppants in conditions of higher pressures, i.e. in deeper well bores.

The value of proppants sphericity coefficient has an effect on the unrestricted flow of gas, which, in turn, affects the gas productivity extracted from the well bore.

The volume of bulk density is a derivative of specific gravity, a sphericity of proppants and their grain size.

Use of proppants with lower specific gravity and high mechanical strength is preferred due to the fact that they enable to use cheaper liquids of lower viscosity and less loaded pumps, as well as they enable to use methods of so-called dry fracturing, i.e. with the use of a minimum quantity of water on the basis of the use of LPG, in particular pentane in a form of gel.

Due to the value of specific gravity, proppants can be divided into groups of high, medium or low specific gravity.

Sintered bauxite proppants with a high content of Aluminium oxide Al₂O₃ are characterised by a high compression strength, they are produced on the basis of kaolin enriched with bauxite. The raw materials are ground, granulated and calcined. The content of Al₂O₃ reaches up to 83%, the specific gravity is above 3.5 Mg/m3 and is classified as high. They are suitable for use in borewell of depths up to 5000 m.

Traditional proppants of average specific gravity are suitable for use in the depths up to 3500 m and have a specific gravity within 3.1 to 3.45 Mg/m3. The content of Al₂O₃ ranges from 40% to 32%.

The proppants of a low specific gravity have been described in US patents US4522731 and US5120455. For the production of light proppants, kaolinite clays containing approx. 50% Al₂O₃ are used and the specific gravity of the proppants is less than 3.0 Mg/m3.

Other light proppants have been described in a US patent US7036591. They contain Al ₂O₃ in quantities within 40% and 32%, and their specific gravity ranges from 1.6 to 2.1 Mg/m3. This specific gravity is obtained as a result of a special short cycle firing, causing a formation of a strong sinter, mainly on the surface of proppants.

A US patent application US20120118574 discloses a method for manufacturing ultralight proppants of large strength with the use of raw materials obtained from the regions of Ningde and Fuan, Fuijan province, China, in particular porcelain clay, plastic ceramic clay, and kaolin clay or calcined fireclay. Those raw materials in China have a long history. They were and are used for the production of ceramic whiteware such as tableware, urns, ornamental elements, and for the production of ceramics used in industry, such as fire-bricks and different ceramic products used in metallurgy.

Therefore, it has been expedient to develop alternative light ceramic proppants, including a method for manufacturing thereof, that would be characterised by a high strength and a low specific gravity, and which can be manufactured from raw materials available in Europe, especially in Poland.

The object of the invention are light ceramic proppants made from a mixture of clays, **characterised in that** they are manufactured from a mixture consisting of:
- illite-beidellite-kaolinite high-plastic clays of the Poznan series, containing from 10% to 27% by weight of Al₂O₃, in the amount of 10% to 40% by weight;
- kaolinitic clays, containing from 18% to 32% by weight of Al₂O₃, in the amount of 30% to 45% by weight;
- kaolin, containing from 28% to 40% by weight of Al₂O₃, in the amount of 30% to 40% by weight;
- fly ash from brown coal combusted in a power plant, containing from 28% to 33% by weight of Al₂O₃, in the amount of 10% to 35% by weight;
- and treatment agents in the amount of up to 10%;
wherein the proppants contain from 18% to 32% by weight of Al₂O₃, from 40% to 76% by weight of SiO₂, and have a specific gravity from 2.15 Mg/m3 to 2.90 Mg/m3 and a bulk density from 1.35 Mg/m3 to 1.70 Mg/m3.

The object of this invention is also a method for manufacturing of light ceramic proppants made from a mixture of clays that, after mixing, is granulated and the granulate is fired and after that it is fractionated, **characterised in that** that the mixture is prepared from:
- illite-beidellite-kaolinite high-plastic clays of the Poznan series, containing from 10% to 27% by weight of Al₂O₃, in the amount of 10% to 40% by weight;
- kaolinitic clays, containing from 18% to 32% by weight of Al₂O₃, in the amount of 30% to 45% by weight;
- kaolin, containing from 28% to 40% by weight of Al₂O₃, in the amount of 30% to 40% by weight;
- fly ash from brown coal combusted in a power plant, containing from 28% to 33% by weight of Al₂O₃, in the amount of 10% to 35% by weight;
- and treatment agents in the amount of up to 10%;
after that the granulate is fired in a rotary furnace in a temperature from 1150°C up to 1320°C in time from 120 to 600 min, obtaining proppants which contain from 18% to 32% by weight of Al₂O₃, from 40% to 76% by weight of SiO₂, and have a specific gravity from 2.15 Mg/m3 to 2.90 Mg/m3 and a bulk density from 1.35 Mg/m3 to 1.70 Mg/m3, depending on the firing time.

It is preferable to chose illite-beidellite-kaolin clays containing from 12% to 25% by weight of Al₂O₃, most preferably from 15% to 25% by weight, to obtain a high plasticity of the mixture.

It is preferable to chose kaolinite clays containing from 20% to 32% of Al₂O₃, most preferably from 15% to 30%.

It is most preferable when kaolin contains from 30% to 40% of Al₂O₃.

It is most preferable, when the clays are chosen so as to obtain proppants containing from 20% to 55% of Al₂O₃.

It is most preferable to use fly ash is from brown coal originating from boilers with dry desulphurisation.

It is most preferable when the clays are chosen so as to obtain proppants containing from 40% to 76% of SiO₂.

The high plasticity of the Poznan series clays and adopted production technologies, in particular the process of granulating, ensure a high sphericity of the granules produced.

Raw materials used to prepare ceramic mass such as illite-beidellite-kaolin clays, kaolinitic clays and kaolin may come from the south-western Poland or from other regions in which there are clays of the indicated content of Al2O3.

The high plasticity clay of Poznan series plasticise the entire mixture of raw materials, provide better moulding/shaping properties, which leads to a better sphericity factor. This is especially necessary in the stage of mechanical granulation. On the other hand, when fired they are characterised by a high compression strength that reaches the values of more than 70 MPa. This is related to large amounts of vitreous phase in this substrate while firing, with the occurrence of different physical and chemical reactions.

Kaolinitic clays are plastic clays of medium plasticity that are used for the production of higher quality building materials. The main minerals are kaolinite and illite. Their main role in the ceramic mass is to provide components to produce the vitreous phase and a large content of mullite in fired material, which improves strength parameters of the material.

Kaolins are the raw materials of low plasticity and therefore for the production of proppants should be used together with other raw materials. In view of the fact that they contain more than 40% Al₂O₃, mainly in the form of kaolinite, their presence in ceramic mass increases strength parameters of proppants.

Fly ash from brown coal combused in power plants are characterised by a chemical composition similar to kaolinite clays. However, owing to the fact that they are produced at high temperatures, they are strongly vitrificated, which preferably affects the sintering during firing and allows to decrease the firing temperature by about 30-50 degrees C.

The method to produce light ceramic proppants according to the invention is the following. In a oscillatory mill shall plastic raw materials are prepared, i.e. Poznan series clay and kaolinite clay. Then the mixed substrates are ground and sieved. Kaolins and fly ash are ground in stackable mills sieving appliances, which guarantees an appropriate quality of the raw material.

Then, the mixture is granulated mechanically or by spraying. When mechanical granulation is used, the proppants are characterised by a slightly higher compression strength and a higher specific gravity and bulk density. In the case of use of a spraying dryer, the granulates of both bulk density and specific gravity are obtained with lower compression strength.

In case of mechanical granulation, the batched mixture of raw materials is homogenised in a turbine mixer. Granulation takes place in the stackable granulator and then the formed granules are dried.

Another processing operation is firing the granulate in a rotary furnace at temperature from 1150°C to 1320°C, optimally from 1180°C to 1280°C. The firing time is from 120 to 600 min., optimally from 180 to 480 min.

Then, the fired proppants are fractionated on a set of industrial sieves and stored.

In the case of granulation in a spraying dryer, the mixture is prepared in the form of slurry and granulated in the spraying dryer. Firing of granulate takes place in a rotary furnace in the same conditions as in the case of mechanical granulation. Another operation after cooling the calcined proppants to ambient temperature, is fractionation and storage of the finished proppants.

The proppants made from such mixtures of raw materials and in the way described above, achieve specific gravity within 2.15 and 2.90 Mg/m3, and with the more favourable selecting raw materials, even from 2.20 to 2.70 Mg/m3. The bulk density is from 1.35 Mg/m3 to 1.70 Mg/m3, and with more favourable selection of the raw materials is between 1.40 and 1.60 Mg/m3. They are characterised of a strength with fraction of 40/70 mesh up to 1.6% crushed at pressure up to 7500 psi, and 2.8% crushed at pressure up to 10 000 psi, and for fraction 30/50 mesh, respectively, up to 1.6% crushed at pressure up to 7500 psi, and up to 2.6% crushed at pressure up to 10 000 psi, and for fraction 20/40 mesh, respectively, up to 0.5% crushed at pressure up to 5000 psi, up to 2.8% crushed at pressure up to 7500 psi, and up to 7.3% crushed at pressure up to 10000 psi.

The solution according to this invention is distinguished from the solution as described in the US patent application US20120118574, by the fact that other types of clays are used which are available in the south-west Poland and are enriched with kaolin and the addition of fly ash originated from brown coal. The proppants according to the invention are characterised of a higher content of Al₂O₃ and lower content of SiO₂. The result of different compositions of raw materials is a difference in the technical parameters of proppants manufactured according to these recipes. In the solution of this invention, the longer lower firing time and longer total firing time are applied. Firing in view of the addition of fly ash can be carried out at a lower temperature. It is also possible to use a wider range of temperatures, particularly together with the increase in participation of improvers.

Following are exemplary embodiments of the present invention.

### Example 1

The ceramic mass containing 30% of Poznan series clays, 40% of kaolinite clays 20% of kaolin and 10% of fly ash from brown coal was prepared as follows. A mixture containing Poznan series clays and kaolinitic clays, was fragmented in an oscillatory mill while maintaining deposit humidity, then it was dried and was deprived of oversize particles. In the next step, it was mixed in a turbine mixer and granulated in a stackable granulator, the granulate size of 40/70 mesh. The dried granulate was fired in a rotary furnace at temperature of 1280°C. The whole process resulted in proppants containing: 27.0% Al₂O₃, 65.0% SiO₂, Fe₂O₃ 3.1%, CaO 2.2%, K₂O+Na₂O 2.1%, other 0.6%. Tests of the proppants have shown specific gravity 2.42 Mg/m3, bulk density 1.41 Mg/m3, crushing strength 1.5% at 7500 psi and 2.6% at 10000 psi. The sphericity was above 0.9.

### Example 2

The same ceramic mass as in Example 1 was granulated by using a spraying dryer up to size of 40/70 mesh and fired in a rotary furnace at temperature of 1280°C. Tests of the proppants have shown: specific gravity 2.41 Mg/m3, bulk density 1.40 Mg/m3, crushing strength 1.6% at 7500 psi and 2.8% at 10000 psi. The sphericity was 0.9.

### Example 3

The ceramic mass containing 40% of Poznan series clays, 40% of kaolinite clays, 10% of kaolin and 10% of fly ash from brown coal was prepared in the same way as in Example 1. After mixing in a turbine mixer, it was granulated in a stackable granulator, the granulate size of 40/70 mesh. The dried granulate was fired in a rotary furnace at a temperature of 1250°C. The whole process resulted in proppants containing: 26.9% Al₂O₃, 65.0% SiO₂, Fe₂O₃ 3.2%, CaO 2.2%, K₂O+Na₂O 2.1%, other 0.6%. Tests of the proppants have shown specific gravity 2.40 Mg/m3, bulk density 1.38 Mg/m3, crushing strength 1.5% at 7500 psi and 2.7% at 10000 psi. The sphericity was above 0.9.

### Example 4

The same ceramic mass as in Example 3 was granulated by using a spraying dryer up to a size of 40/70 mesh and fired in a rotary furnace at temperature of 1250°C. The tests of the proppants have shown specific gravity 2.39 Mg/m3, bulk density 1.37 Mg/m3, crushing strength 1.6% at 7500 psi and 2.8% at 10000 psi. The sphericity was 0.9.

## Claims

1. Light ceramic proppants made from a mixture of clays, **characterised in that** they are manufactured from a mixture consisting of:
- illite-beidellite-kaolinite high-plastic clays of the Poznan series, containing from 10% to 27% by weight of Al₂O₃, in the amount of 10% to 40% by weight;
- kaolinitic clays, containing from 18% to 32% by weight of Al₂O₃, in the amount of 30% to 45% by weight;
- kaolin, containing from 28% to 40% by weight of Al₂O₃, in the amount of 30% to 40% by weight;
- fly ash from brown coal combusted in a power plant, containing from 28% to 33% by weight of Al₂O₃, in the amount of 10% to 35% by weight;
- and treatment agents in the amount of up to 10%;
wherein the proppants contain from 18% to 32% by weight of Al₂O₃, from 40% to 76% by weight of SiO₂, and have a specific gravity from 2.15 Mg/m3 to 2.90 Mg/m3 and a bulk density from 1.35 Mg/m3 to 1.70 Mg/m3.

2. A method for manufacturing of light ceramic proppants made from a mixture of clays that, after mixing, is granulated and the granulate is fired and after that it is fractionated, **characterised in that** that the mixture is prepared from:
- illite-beidellite-kaolinite high-plastic clays of the Poznan series, containing from 10% to 27% by weight of Al₂O₃, in the amount of 10% to 40% by weight;
- kaolinitic clays, containing from 18% to 32% by weight of Al₂O₃, in the amount of 30% to 45% by weight;
- kaolin, containing from 28% to 40% by weight of Al₂O₃, in the amount of 30% to 40% by weight;
- fly ash from brown coal combusted in a power plant, containing from 28% to 33% by weight of Al₂O₃, in the amount of 10% to 35% by weight;
- and treatment agents in the amount of up to 10%;
wherein after that the granulate is fired in a rotary furnace in a temperature from 1150°C up to 1320°C in time from 120 to 600 min, obtaining proppants which contain from 18% to 32% by weight of Al₂O₃, from 40% to 76% by weight of SiO₂, and have a specific gravity from 2.15 Mg/m3 to 2.90 Mg/m3 and a bulk density from 1.35 Mg/m3 to 1.70 Mg/m3, depending on the firing time.
